# EUROPÄISCHE PATENTANMELDUNG

(11) **EP 2 060 471 A2**
(43) Veröffentlichungstag der Anmeldung: **20.05.2009**
(21) Anmeldenummer: 08105780.4
(22) Anmeldetag: 12.11.2008
(51) Int. Cl.: B62B 3/10, B62B 3/14

(54) **Transportwagen**

(30) Priorität: 16.11.2007 DE 102007055072
(71) Anmelder: Wanzl Metallwarenfabrik GmbH, 89336 Leipheim (DE)
(72) Erfinder: Boxler, Anton, 87772 Pfaffenhausen (DE); Wagner, Christian, 87757 Kirchheim (DE)

(57) **Zusammenfassung**

Die Erfindung betrifft einen von Hand bewegbaren, stapelbaren Transportwagen mit an einem Fahrgestell (2) angeordneten Rollen (3), wobei das Fahrgestell (2) mindestens aus einem Bodenteil (8), einem Stützteil (9), sowie Seitenteilen (10) gebildet ist, und wobei das Fahrgestell (2) Ablagefächer (4) und Anschlagvorrichtungen (11) aufweist.

Die Erfindung zeichnet sich dadurch aus, dass jedes Seitenteil (10) spiegelbildlich ausgeführt ist, dass jedes Seitenteil (9) ortsfest am Fahrgestell (2) und dass jedes Seitenteil (10) derart geformt ist, dass sowohl eine Begrenzung B als auch eine Führung F für auf dem Wagen (1) zu transportierende Gegenstände gegeben ist.

## Beschreibung

Die Erfindung betrifft einen Transportwagen mit den Merkmalen im Oberbegriff des Hauptanspruchs.

Transportwagen dieser Gattung werden zum Transportieren von Gegenständen wie beispielsweise in Baumärkten eingesetzt.

Ein Transportwagen mit mehreren Ablagefächern ist aus dem US-Patent 4,679,805 bekannt. Dieses zeigt einen stapelbaren Transportwagen mit vier Rollen. An einem Gestell sind zwei Bodenteile auf verschiedenen Höhen vorgesehen, wobei eines der Ablagefächer Anschlagvorrichtungen aufweist. Weiterhin sind zwei Halterungen und ein weiteres Ablagefach mit einer Anschlagvorrichtung ortsfest angeordnet.

Auch die US-Patentschrift 3,224,787 zeigt einen von Hand beweglichen stapelbaren Transportwagen, der ein Fahrgestell aufweist. Ein Bodenteil, eine Rückwand und zwei Seitenteile sind am Fahrgestell vorgesehen. Weiterhin sind Einlegeböden oder Haken an der Rückwand angeordnet.

Weiterhin ist aus der europäischen Patentschrift EP 1 104 376 B1 ein stapelbarer Transportwagen bekannt, der ein Ablagefach mit einer Anschlagvorrichtung für große, flächige Gegenstände beschreibt. Bei einem solchen Wagen ist weiterhin ein Ablagefach für zusätzliche Gegenstände vorgesehen. Das Fahrgestell weist gegenüberliegend angeordnete Seitenteile auf, die als Stütze des Ablagefaches dienen.

Schwierigkeiten treten bei Wagen der herkömmlichen Art auf, wenn lange jedoch nicht besonders großflächige Gegenstände, wie z.B. Vier-Kanthölzer transportiert werden sollen. Es kommt hierbei vor, dass die Länge solcher Hölzer erheblich größer ist, als die Breite der Transportwagen. Was zu Problemen beim Beladen als auch beim Transportieren der Gegenstände führt.

Daher besteht die Aufgabe der vorliegenden Erfindung darin, einen besseren Transportwagen aufzuzeigen.

Die Erfindung löst die Aufgabe mit den Merkmalen im kennzeichnenden Teil des Hauptanspruchs.

Durch die konstruktive Veränderung der Seitenteile wird ein kompakter, einfach zu bewegender Wagen mit einer zusätzlichen Führung für lange und nicht großflächige Teile beschrieben.

Die Erfindung wird anhand von Ausführungsbeispielen näher erläutert. Es zeigt
- Figur 1: einen Wagen in 3-D-Ansicht;
- Figur 2: denselben Wagen in Seitenansicht;
- Figur 3: denselben Wagen in Rückansicht;
- Figur 4: denselben Wagen in Draufsicht sowie
- Figur 5: ein Wagen mit Korb in 3-D-Ansicht.

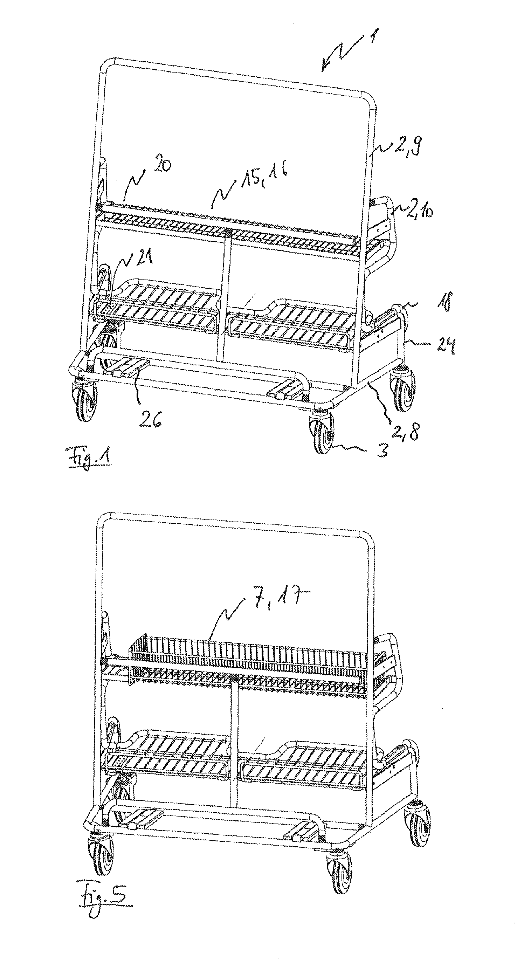

Die Figuren 1 bis 4 zeigen einen von Hand beweglichen stapelbaren Wagen 1. Der Wagen 1 weist ein Fahrgestell 2 auf, an dem vier Rollen 3 angeordnet sind. Es hat sich als sinnvoll erwiesen, einen oder mehrere Feststeller 22 jeweils an einer Rolle 3 vorzusehen.

Das Fahrgestell 2 ist aus mindestens einem Bodenteil 8, einem Stützteil 9 sowie spiegelbildlich ausgeführten und ortsfest am Fahrgestell 2 angeordneten Seitenteilen 10 gebildet ist.

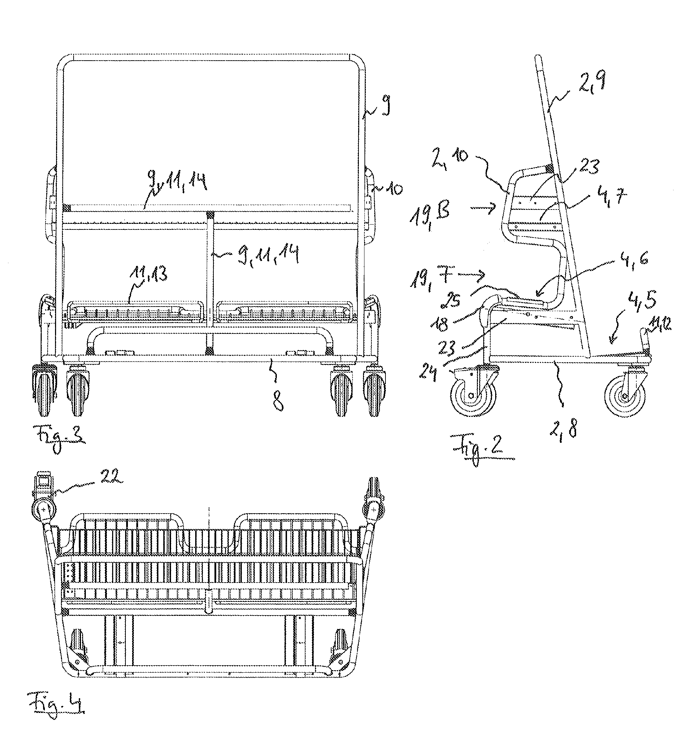

Das Stützteil 9 ist ortsfest am Bodenteil 8 angeordnet. Figur 2 ist zu entnehmen, dass das Stützteil 9 nicht im rechten Winkel, sondern leicht schräg, in Richtung der Ablagefächer 6, 7 geneigt, am Bodenteil 8 angeordnet ist. Hierdurch ist eine sichere Lagerung von großflächigen Gegenständen sichergestellt.

Jedes Seitenteil 10 ist derart geformt, dass sowohl eine Begrenzung B als auch eine Führung F für auf dem Wagen 1 zu transportierende Gegenstände gegeben ist. Jedes Seitenteil 10 weist wenigstens einen offenen, U-förmigen Bereich 19 auf. Es hat sich weiterhin als sinnvoll erwiesen, dass jedes Seitenteil 10 in Form eines offenen und in Form eines des Stützteils 9 begrenzten U-förmigen Bereichs 19 gebildet ist. Hierbei ist der offene U-förmige Bereich 19 unterhalb des begrenzten U-förmigen Bereichs 19 gebildet. Dies hat den Vorteil, dass die Gegenstände, die nicht näher dargestellt sind, nicht allzu hoch gehoben werden müssen.

Das zweite Ablagefach 6 bietet durch die offene Form des U-förmigen Bereichs, dass eine Führung F gebildet ist. Die Führung F weist vorzugsweise eine Größe auf, dass eines oder mehrere Vier-Kanthölzer abgelegt werden können. Ein Herunterfallen wird verhindert, da drei Flächen als Begrenzung dienen. Auch kann ein Auflageprofil 25 für eine zusätzliche Sicherung gegen ein Herunterrutschen von Gegenständen Verwendung finden.

Das Fahrgestell 2 weist weiterhin Ablagefächer 4 und Anschlagvorrichtungen 11 auf. Wie in Figur 2 dargestellt, weist der Wagen 1 drei Ablagefächer 4 mit Anschlagvorrichtungen 11 auf. Hierbei ist jedes Ablagefach 4 andersartig ausgeführt, dadurch bedingt ist auch die Anschlagvorrichtung 11 jeweils andersartig ausgeführt.

Figur 2 zeigt auf der rechten Seite ein erstes Ablagefach 5. Das Bodenteil 8, das ebenfalls eine für die Stapelbarkeit geforderte U-Form aufweist, bildet zusammen mit zwei Verstrebungen 26 das Ablagefach 5.

Es ist eine erste Anschlagvorrichtung 12 vorgesehen. Diese Anschlagvorrichtung 12 ist in bekannter Weise in Form eines Bügels über die komplette Breite vorgesehen. Die Anschlagvorrichtung 12 ist in Figur 1 dargestellt. Figur 2 zeigt weiterhin auf der linken Seite ein zweites und ein drittes Ablagefach 6, 7.

Das untere, zweite Ablagefach 6 ist durch den offenen U-förmigen Bereich 19 gebildet. Zur Absicherung ist eine Fixierung 23 vorgesehen. Diese stellt eine Verbindung zwischen Seitenteil 10 und Stützteil 9 dar. Vorzugsweise ist das zweite Ablagefach 6 aus Quer- und Längsdrähten 15, 16 gebildet. Das zweite Ablagefach 6 weist eine zweite Anschlagvorrichtung 13 auf. Diese ist durch eine oder mehrere ortsfest angeordnete Bügel gebildet, die in der Nähe des Stützteiles 9 vorgesehen sind - wenn das zweite Ablagefach 6 - wie es in den Figuren dargestellt ist, eine leichte Neigung in Richtung Stützteil 9 aufweist. Diese Neigung hat den Vorteil, dass sich Gegenstände leichter auf das zweite Ablagefach 6 legen lassen.

Von dem offenen U-förmigen Bereich besteht eine Verbindung 24 zum Bodenteil 8. Die Höhe ist derart zu wählen, dass ein bequemes Beladen des zweiten Ablagefachs 6 gegeben ist. Wie in den Figuren 1-5 dargestellt, endet die Verbindung 24 als Aufnahme für die hinteren Rollen 2.

Insbesondere im Bereich der Verbindung 24 ist die Fixierung 23 vorgesehen. Diese ist ortsfest zwischen Verbindung 24 und Stützteil 9 angeordnet.

Jedes Seitenteil 10 weist eine Abrutschsicherung 18 auf. Diese ist wechselbar anzubringen. Es bietet sich eine Abrutschsicherung 18 aus Kunststoff an. Sie ist an dem äußeren Bereich des U-förmigen Bereichs 19 vorgesehen.

Figur 2 zeigt auch das dritte Ablagefach 7. Es ist in dem Bereich angeordnet, indem der U-förmige Bereich 19 durch das Stützteil 9 begrenzt ist. Hierdurch ist eine Begrenzung B gegeben. Gegenstände, die im oder auf dem dritten Ablagefach 7 liegen, fallen - insbesondere auch durch die Fixierung 23 zwischen Stützteil 9 und Seitenteil 10 nicht herunter. Weiterhin bietet dieser U-förmige Bereich 19 eine gute Möglichkeit, den Wagen 1 zu schieben.

Auch das dritte Ablagefach 7 weist eine Anschlagvorrichtung 11 auf. Diese dritte Anschlagvorrichtung 14 ist, wie insbesondere aus den Figuren 1 und 3 hervorgeht, durch ein horizontales und ein vertikales Teil des Stützteiles 9 gebildet.

Die Größe beider U-förmigen Bereiche 19 ist in vorteilhafter Ausführung nahezu gleich. Es ist aber auch eine Ausführung von unterschiedlichen Größen der U-förmigen Bereiche 19 denkbar. Auch könnte eine andere Anzahl an U-förmigen Bereichen 19 vorgesehen werden.

Zur Sicherung des dritten Ablagefachs 7 ist ebenfalls eine Fixierung 23 zwischen Stützteil 9 und dem U-förmigen Bereich 19 vorgesehen.

Figur 5 zeigt einen Wagen 1, bei dem ein Teil des dritten Ablagefachs 7 als Korb 17 gebildet ist. Alternativ ist ein anderes Ablagefach 4 oder ein Teil eines Ablagefaches 4 als Korb 17 gebildet. Der Einsatz eines Korbes 17 eignet sich insbesondere für kleine Artikel. Die Anordnung am dritten Ablagefach 7 ist insofern vorteilhaft, da sich der Benutzer des Wagens 1 nicht zu bücken braucht.

Jeder Wagen 1 kann eine Stielhalterung 20 und eine Stielauflage 21 für das Anordnen von Besenstielen oder Stielen, die zum Stützen von Pflanzen verwendet werden, Zaunteilen, etc. aufweisen.

Die Stielhalterung 20 ist am dritten Ablagefach 7 vorgesehen, wie es in den Figuren dargestellt ist. Das dritte Ablagefach 7 kann aus Querdrähten 15 und Längsdrähten 16 gebildet sein. Zum Vorsehen einer Stielhalterung wird lediglich ein Bereich ohne Drähte 15, 16 vorgesehen.

Die Stielauflage 21 ist am zweiten Ablagefach 6 angeordnet. Diese verhindert, dass Stiele, die nicht weiter dargestellt sind, nicht auf den Boden durchrutschen.

### Bezugszeichenliste

- 1: Transportwagen, Wagen
- 2: Fahrgestell
- 3: Rollen
- 4: Ablagefach
- 5: erstes Ablagefach
- 6: zweites Ablagefach
- 7: drittes Ablagefach
- 8: Bodenteil
- 9: Stützteil
- 10: Rechtes, linkes Seitenteil
- 11: Anschlagvorrichtung
- 12: erstes Anschlagvorrichtung
- 13: zweites Anschlagvorrichtung
- 14: drittes Anschlagvorrichtung
- 15: Querdraht
- 16: Längsdraht
- 17: Korb
- 18: Abrutschsicherung
- 19: U-förmiger Bereich
- 20: Stielhalterung
- 21: Stielauflage
- 22: Feststeller (Rollen)
- 23: Fixierung
- 24: Verbindung
- 25: Auflageprofil
- 26: Verstrebung

## Patentansprüche

1. Von Hand bewegbarer, stapelbarer Transportwagen mit an einem Fahrgestell (2) angeordneten Rollen (3), wobei das Fahrgestell (2) mindestens aus einem Bodenteil (8), einem Stützteil (9), sowie spiegelbildlich ausgeführten und ortsfest am Fahrgestell (2) angeordneten Seitenteilen (10) gebildet ist, und wobei das Fahrgestell (2) Ablagefächer (4) und Anschlagvorrichtungen (11) aufweist, **dadurch gekennzeichnet,** und dass jedes Seitenteil (10) derart geformt ist, dass sowohl eine Begrenzung B als auch eine Führung F für auf dem Wagen (1) zu transportierende Gegenstände gegeben ist.

2. Von Hand bewegbarer, stapelbarer Transportwagen nach Anspruch 1, **dadurch gekennzeichnet, dass** jedes Seitenteil (10) wenigstens einen offenen, U-förmigen Bereich (19) aufweist.

3. Von Hand bewegbarer, stapelbarer Transportwagen nach den Ansprüchen 1 und 2, **dadurch gekennzeichnet, dass** jedes Seitenteil (10) in Form eines offenen und in Form eines durch das Stützteil (9) begrenzten U-förmigen Bereichs (19) gebildet ist.

4. Von Hand bewegbarer, stapelbarer Transportwagen nach Anspruch 1, **dadurch gekennzeichnet, dass** ein Ablagefach (4) oder ein Teil eines Ablagefaches (4) als Korb (17) gebildet ist.

5. Von Hand bewegbarer, stapelbarer Transportwagen nach Anspruch 1, **dadurch gekennzeichnet, dass** jedes Seitenteil (10) eine Abrutschsicherung (18) aufweist.

6. Von Hand bewegbarer, stapelbarer Transportwagen nach Anspruch 1, **dadurch gekennzeichnet, dass** der Wagen (1) eine Stielhalterung (20) und eine Stielauflage (21) aufweist.

7. Von Hand bewegbarer, stapelbarer Transportwagen nach Anspruch 1, **dadurch gekennzeichnet, dass** wenigstens ein Feststeller (22) vorgesehen ist.
